**Europäisches Patentamt**

(19) **European Patent Office**

**Office européen des brevets**

(11) Veröffentlichungsnummer: **0 179 232**
**B1**

(12) # EUROPÄISCHE PATENTSCHRIFT

(45) Veröffentlichungstag der Patentschrift:
**12.10.88**

(51) Int. Cl.⁴: **B 23 B 31/04**

(21) Anmeldenummer: **85110788.8**

(22) Anmeldetag: **28.08.85**

(54) **Backenspannfutter.**

(30) Priorität: **20.10.84 DE 3438595**

(43) Veröffentlichungstag der Anmeldung:
**30.04.86 Patentblatt 86/18**

(45) Bekanntmachung des Hinweises auf die Patenterteilung:
**12.10.88 Patentblatt 88/41**

(84) Benannte Vertragsstaaten:
**CH FR GB IT LI**

(56) Entgegenhaltungen:
**DE-A-3 310 147**
**DE-A-3 344 552**
**DE-B-2 726 077**

(73) Patentinhaber: **Röhm, Günter Horst, Heinrich-Röhm- Strasse 50, D-7927 Sontheim (DE)**

(72) Erfinder: **Röhm, Günter Horst, Heinrich- Röhm-Strasse 50, D-7927 Sontheim (DE)**

(74) Vertreter: **Fay, Hermann, Dipl.- Phys. Dr., Ensingerstrasse 21 Postfach 1767, D-7900 Ulm (Donau) (DE)**

EP 0 179 232 B1

LIBER, STOCKHOLM 1988

## Beschreibung

Die Erfindung betrifft ein Backenspannfutter, insnesondere zum schlagenden und/oder drehenden Bohren, dessen zentrisch zur Futterachse verstellbare Spannbacken je zwei zueinander und zur Futterachse parallel verlaufende Spannschneiden, die spiegelsymmetrisch zu der durch die Futterachse gehenden Backenmittelebene ausgebildet sind, und auf der außenliegenden Seite jeder Spannschneide in zur Backenmittelebene spiegelsymmetrischer Ausbildung eine zur Futterachse parallele Spannfläche aufweisen, die mit ihrem äußeren Bereich in einer gedachten äußeren Grenzfläche verläuft oder diese Grenzfläche zumindest tangiert, die vom äußeren Rand der Spannfläche mit freiem Abstand über die auf ihrer Seite liegende Spannschneide und äußere Schneidenflanke hinweg schräg zur Backenmittelebene verläuft.

Ein aus DE-A-3 310 147 bekanntes Backenspannfutter dieser Art ermöglicht die Aufnahme sowohl von Werkzeugen mit glattem zylindrischem Schaft als auch von Werkzeugen mit am Schaft längsverlaufenden Rillen. Die Spannfläche ist konvex gewölbt. Im Scheitel der Spannfläche sind die Spannbacken mit einer in Längsrichtung verlaufenden, sich über die gesamte Länge der Spannfläche erstreckenden Kerbe versehen, durch die zwei Kanten entstehen, welche beim Spannen mit dem Schaft des Bohrwerkzeugs in Eingriff gelangen. Der Keilwinkel der schneidenartigen Kanten ist relativ groß und die Abnützung der Spannbacken somit gering. Die Kanten dringen nur geringfügig in den Schaft des Bohrwerkzeugs ein, so daß praktisch keine bleibenden Eindrücke entstehen. Bei Bohrwerkzeugen mit Längsrillen am Schaft können die Spannbacken mit ihren konvexen Spannflächen formschlüssig in die Ausnehmungen eingreifen. Das Spannen der Bohrwerkzeuge wird dabei durch die am Scheitel der Spannbacken angeordnete Kerbe nicht beeinträchtigt.

Auch aus DE-A-2 842 783 oder DE-U-8 337 365 ist es bekannt, am Schaft von Schlagbohrwerkzeugen längsverlaufende Rillen vorzusehen und die Einspannung im Backenspannfutter so vorzunehmen, daß die Spannbacken zwar in die Rillen eingreifen und dadurch die Drehmitnahme des Werkzeugs sicher stellen, im übrigen aber das Werkzeug axial nur führen, so daß es in dieser Richtung noch beweglich ist und von der Bohrmaschine empfangene Schlagbewegungen unbehindert durch das Futter ausführen kann. Die Spannbacken der für solche Bohrwerkzeuge vorgesehenen Backenspannfutter besitzen zwar seitliche Spannflächen, die den Flankenbereichen der Rillen anliegen, um die nötige drehschlüssige Verbindung zu ergeben, jedoch keine Spannschneiden, so daß sie zum Einspannen von Werkzeugen mit üblichem glattem also ungerilltem Schaft nicht geeignet sind.

Schließlich sind aus DE-U-7 227 714 Backenspannfutter bekannt, deren Spannbacken je zwei zueinander und zur Futterachse parallel verlaufende Spannschneiden aufweisen, die spiegelsymmetrisch zu der durch die Futterachse gehenden Backenmittelebene ausgebildet sind und dazu dienen, ein Bohrwerkzeug mit im Querschnitt sechseckigem Werkzeugschaft für den Schlagbohrbetrieb so einzuspannen, daß beide Spannschneiden der Spannbacken gemeinsam an jeweils einer der ebenen Schaftflächen anliegen, wodurch ein Verdrehen der Spannbacken um ihre Längsachse und die damit verbundene Gefahr eines selbsttätigen Lockerns der Einspannung während des Bohrbetriebs weitgehend vermieden werden kann. Jedoch sind solche Spannschneiden hohem Verschleiß ausgesetzt. Sie werden schnell verformt und abgetragen und somit stumpf und sind dann nicht mehr zu einer sicheren Einspannung des Bohrwerkzeuges geeignet. Daher ist bei dem bekannten Backenspannfutter zwischen den beiden Spannschneiden noch eine im Vergleich zu ihnen radial zurückversetzte dritte Spannschneide vorgesehen, die bei einem sechseckigen Werkzeugschaft an dessen ebenen Schaftflächen frei steht und nur bei Bohrwerkzeugen mit üblichem zylindrischen Werkzeugschaft zum Tragen kommt, wenn der Schaftdurchmesser klein genug ist, so daß die benachbarten, weiter vorstehenden Spannschneiden nicht mehr am Werkzeugschaft zur Anlage kommen. Dann aber besteht wieder der Nachteil, daß die Spannbacke nur über diese mittlere Spannschneide am Werkzeugschaft anliegt, also Drehbewegungen der Spannbacke stattfinden können. Im übrigen sind bei dem bekannten Backenspannfutter die außenliegenden Schneidenflanken ebene Flächen, die von den Schneidenkanten der Spannschneiden unmittelbar zu den seitlichen Spannbackenrändern verlaufen und zur Einspannung des Bohrwerkzeuges nichts beitragen.

Der Erfindung liegt die Aufgabe zugrunde, ein Backenspannfutter der eingangs genannten Art so auszubilden, daß es zum Einspannen von Werkzeugen mit gerilltem oder glattem Schaft gleichermaßen gut geeignet ist, daß beim Betrieb von Bohrwerkzeugen mit gerilltem Schaft die Spannschneiden unbeeinträchtigt, also scharf und unverformt bleiben, und daß beim Betrieb von Bohrwerkzeugen mit glattem Schaft die Spannschneiden zwar leicht in den Schaft eindringen können, die Eindringtiefe aber genau begrenzt ist.

Diese Aufgabe wird nach der Erfindung dadurch gelöst, daß die Spannfläche an die äußere Schneidenflanke anschließt und mit ihrem an die äußere Schneidenflanke anschließenden inneren Bereich in einer gedachten inneren Grenzfläche verläuft oder diese Grenzfläche zumindest tangiert, die senkrecht durch die Backenmittelebene und von der Futterachse aus gesehen hinter den Spannschneidenkanten verläuft.

Bei Bohrwerkzeugen mit gerilltem Schaft kommen nur die äußeren Bereiche der seitlichen Spannflächen an den Rillenseitenwänden zum Tragen, aber die Spannschneiden einschließlich ihrer Schneidenflanken stehen frei in das Rillenprofil vor, so daß die Spannschneiden auch nach längerem Schlagbohrbetrieb noch immer scharf und unverformt sind. Beeinträchtigungen der Spannschneiden werden erst möglich, wenn die seitlichen Spannflächen durch Verschleiß, d. h. Werkstoffverdichtung, -verformung und/oder Werkstoffabtragung, soweit zurückverlegt worden sind, daß die Schneidenflanken und/oder die Spannschneiden selbst mit der Rillenwand in Kontakt gelangen. Dies aber erfolgt erst, wenn das Werkzeug ohnehin im ganzen soweit abgenutzt ist, daß es seinen Dienst erfüllt hat und ersetzt werden kann. Werden Werkzeuge mit ungerilltem glattem Schaft eingespannt, so kommen zunächst nur die Spannschneiden in üblicher Weise zum Tragen. Sie können sich im Schlagbohrbetrieb in den Schaft einarbeiten und mit einem dazu geeigneten Schneidenwinkel versehen sein. Jedoch wird die Tiefe ihres Eindringens durch die seitlichen Spannflächen begrenzt, sobald diese mit ihrem an die Schneidenflanke angrenzenden inneren Bereich zur Anlage am Werkzeugschaft gelangen. In diesem Zustand tragen dann auch die seitlichen Spannflächen, aber mit ihrem inneren Bereich, zur Einspannung bei und entlasten die Spannschneiden.

Im einzelnen empfiehlt es sich, daß zwischen den Spannschneiden eine Nut verläuft, deren Nutgrund mindestens bis auf die innere Grenzfläche vertieft ist. Dann wirkt auch der den Nutgrund bildende Flächenbereich der Spannbacken ähnlich wie die inneren Bereiche der seitlichen Spannflächen im Sinne einer Begrenzung der Eindringtiefe. Vorzugsweise ist die innere Grenzfläche von einer Ebene gebildet, die von den Schneidenkanten einen Abstand von einigen Zehntel Millimeter, insbesondere zwei bis drei Zehntel Millimeter aufweist. Die dadurch festgelegte maximale Eindringtiefe der Spannschneiden in den Werkzeugschaft hat sich in der Praxis als optimal erwiesen. Denn einerseits kann sich bei dieser Eindringtiefe das Bohrwerkzeug noch schnell genug axial von den Spannschneiden freiarbeiten, so daß es die in dieser Richtung gewünschte Beweglichkeit erhält, andererseits reicht diese Eindringtiefe für die sichere drehschlüssige Mitnahme des Bohrwerkzeugs schon aus.

Die gedachte äußere Grenzfläche folgt in etwa der Rillenwandfläche eines gerillten Werkzeugschaftes, so daß die äußere Grenzfläche dem Verlauf und der Gestalt der Rillenwandfläche weitgehend ähnlich ist. Daher ist in einer bevorzugten Ausführungsform die äußere Grenzfläche von einer Ebene gebildet, die mit der Backenmittelebene einen Winkel von 45° bis 65°, insbesondere einen Winkel von 60°, einschließt. Dies entspricht dreieckigem Rillenprofil mit einem Spitzenwinkel von 120°. Hat dagegen die Rille- ein konkav gewölbtes Profil, so kann die äußere Grenzfläche zur Seite der Spannbacke hin entsprechend konkav gewölbt sein und ihre Tangente im in der Backenmittelebene liegenden Flächenscheitel einen Winkel von 90°, im an der Spannfläche liegenden Flächenfuß einen Winkel von 45° bis 65°, insbesondere wiederum einen Winkel von 60°, mit der Backenmittelebene einschließen. Ersichtlich sind für einen gerillten Bohrerschaft mit konkav gewölbtem Rillenprofil passende Spannbacken auch geeignet für Bohrerschäfte mit dreieckigem Rillenprofil, denn dann können die Backenschneiden erst recht nicht die Rillenwandung berühren, weil bei dreieckigem Rillenprofil der für die Backenschneiden zur Verfügung stehende Rillenfreiraum noch größer als bei konkav gewölbtem Rillenprofil ist.

Weiter empfiehlt es sich, daß die Spannfläche an der Schneidenflanke innerhalb der inneren Grenzfläche verläuft, was eine optimal große Flächenanlage ergibt, wenn sich zur Begrenzung der Eindringtiefe der Spannschneiden in den Bohrerschaft die seitlichen Spannflächen mit ihren inneren Bereichen am Schaftaufsetzen. Die außenliegenden Schneidenflanken bilden zweckmäßig ebene Flächen. Diese Flächen verlaufen mit lichtem Abstand von der gedachten äußeren Grenzfläche. Nicht nur die Schneidenkanten selbst, sondern auch die Schneidenflanken bleiben ohne Kontakt mit der Rillenwand des Bohrerschaftes. Der Spitzenwinkel der Spannschneiden beträgt etwa 90° bis 100°. Spitzenwinkel dieser Größe haben sich als optimal zum schnellen Eindringen der Spannschneiden in den Werkzeugschaft und für die drehende Mitnahme des Bohrwerkzeuges durch die Spannbacken erwiesen.

Die seitlichen Spannflächen selbst können überall in der jeweils für ihren Verlauf maßgebenden Grenzfläche liegen, was aber im Übergangsbereich zwischen beiden Grenzflächen und an den seitlichen Backenrändern zu Kantenbildungen führt. Besser und im Rahmen der Erfindung daher bevorzugt ist die Ausführungsform, in der die Spannflächen praktisch überall konvex gewölbt sind, so daß Kantenbildungen in der Spannfläche vermieden werden.

Im folgenden wird die Erfindung an in der Zeichnung dargestellten Ausführungsbeispielen näher erläutert; es zeigen:

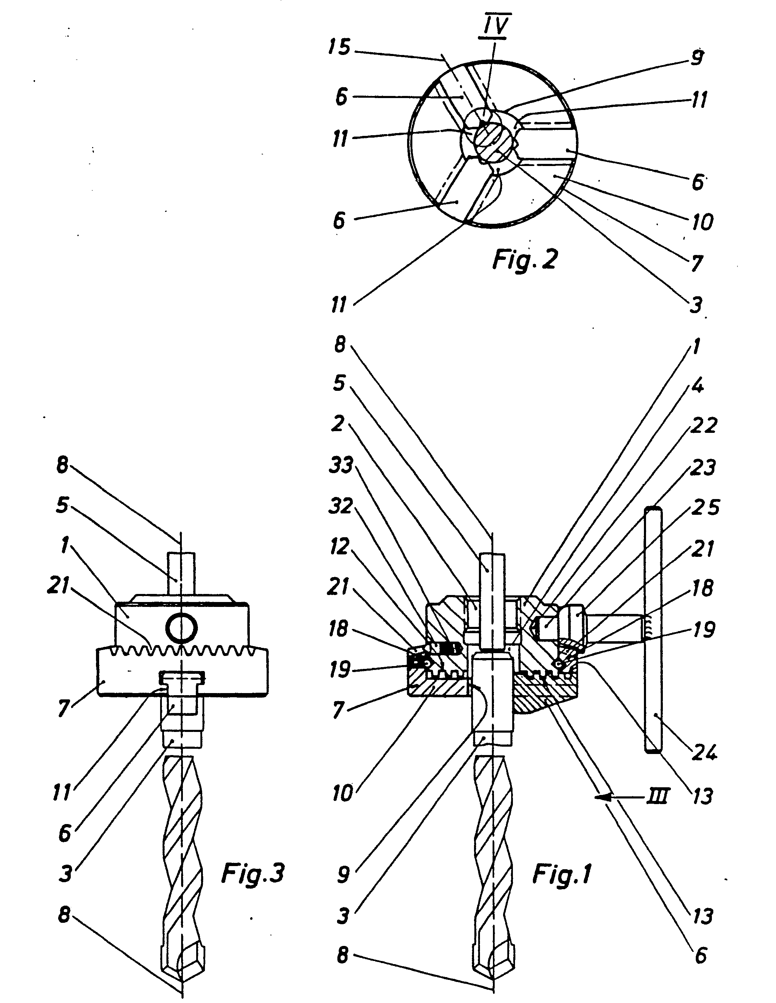

Fig. 1   einen Axialschnitt durch ein Spannbackenfutter nach der Erfindung mit am Bohrfutter angesetztem Spannschlüssel,

Fig. 2   eine Stirnansicht des Backenspannfutters nach Fig. 1 ohne Spannschlüssel,

Fig. 3   eine Seitenansicht in Richtung III des Backenspannfutters,

Fig. 4   das in Fig. 2 mit IV bezeichnete Detail in stark vergrößerter Darstellung.

Das in der Zeichnung dargestellte Dreibackenspannfutter besitzt einen zum Anschluß an eine nicht dargestellte Bohrspindel einer im übrigen ebenfalls nicht dargestellten Bohrmaschine eingerichteten Futterkörper 1, wozu der Futterkörper mit einer zentralen Gewindeaufnahme 2 versehen ist. Für den Bohrer 3 ist im Futterkörper 1 eine Öffnung 4 vorgesehen, die axial zur Aufnahme 2 für die Bohrspindel hin offen ist, so daß die Möglichkeit besteht, beim schlagenden Bohren die Schlagwirkung der Bohrspindel über einen in der Bohrspindel geführten Schläger 5 unmittelbar auf das Ende des Bohrers 3 zu übertragen. Die den Bohrer 3 haltenden Spannbacken sind mit 6 bezeichnet und mittels eines am Futterkörper 1 drehbar und axial unverschiebbar geführten Stellringes 7 zentrisch zur Futterachse 6 verstellbar. Dieser Stellring 7 bildet eine zum Futterkörper 1 koaxiale, vor der bohrerseitigen Stirnfläche des Futterkörpers 1 liegende und mit einer Öffnung 9 für den Bohrer 3 versehene Ringscheibe 10, in der die Spannbacken 6 in zur Öffnung 9 für den Bohrer 3 hin offenen Radialschlitzen 11 geführt sind. Der Futterkörper 1 trägt an seiner der Ringscheibe 10 zugewandten Stirnseite ein planes Spiralgewinde 12, dessen spiralige Gewindegänge mit entsprechenden spiraligen planen Gewindegangabschnitten 13 an der dem Futterkörper 1 zugewandten Seite der Spannbacken 6 im Eingriff stehen. Der Stellring 7 ist mit einem an seine stirnseitige Ringscheibe 10 anschließenden Kragen 18 ausgebildet, der den Futterkörper 1 an dessen zylindrischer Außenfläche umschließt und den Stellring 7 am Futterkörper 1 führt. Zur Sicherung des Stellringes 7 gegen Axialbewegungen relativ zum Futterkörper 1 bilden der Kragen 18 und der Futterkörper 1 zwischen sich einen sich in Umfangsrichtung erstreckenden Ringkanal, in den teils in den Kragen 18 und teils in den Futterkörper 1 radial vorstehende Kugeln 19 eingelegt sind. Der Stellring 7 ist an seinem rückwärtigen Rand mit einer kegeligen Verzahnung 21 versehen. Im Futterkörper 1 befindet sich mindestens eine Führungsaufnahme 22 für den Führungszapfen 23 eines Spannschlüssels 24, der ein kegeliges Zahnritzel 25 trägt, das bei am Spannfutter angesetztem Spannschlüssel in die Außenverzahnung 21 des Stellringes 7 greift. Der Stellring 7 kann im übrigen gegen selbsttätiges Lockern der Bohrereinspannung durch Raststifte 32 gesichert sein, die radial im Futterkörper geführt sind und unter dem Druck von Federn 33 radial nach außen in die Verzahnung 21 des Stellringes 7 vorstehen.

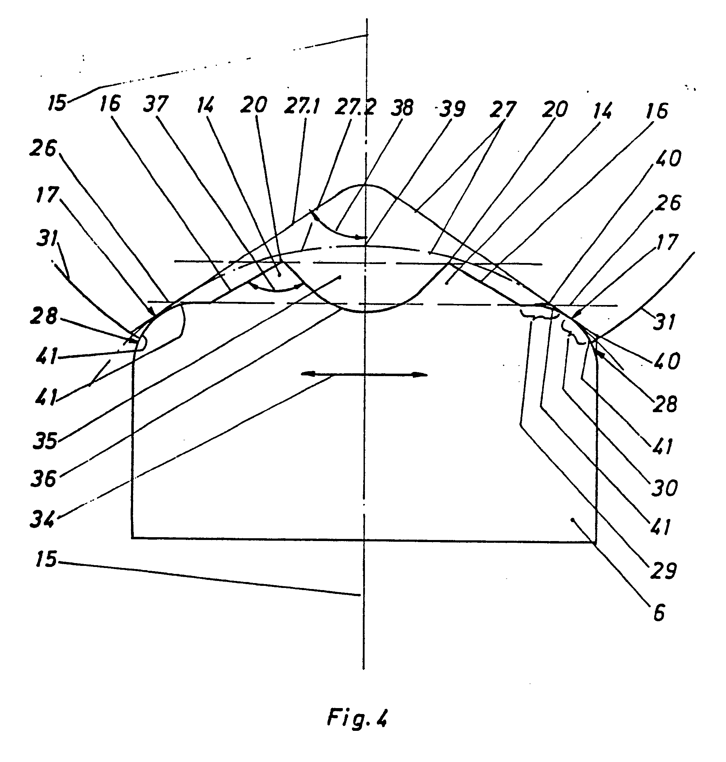

Die Spannbacken 6 besitzen je zwei zueinander und zur Futterachse 8 parallel verlaufende Spannschneiden 14, die spiegelsymmetrisch zu der durch die Futterachse 8 gehenden Backenmittelebene 15 ausgebildet sind. Die Spannbacken 6 besitzen auf der außenliegenden Seite jeder Spannschneide 14 in zur Backenmittelebene 15 spiegelsymmetrischer Ausbildung je eine an die Schneidenflanke 16 anschließende und zur Futterachse 8 parallel verlaufende Spannfläche 17. Der Verlauf dieser Spannflächen 17 wird im einzelnen bestimmt durch zwei gedachte Grenzflächen 26, 27, nämlich durch eine innere Grenzfläche 26, die senkrecht durch die Backenmittelebene 15 und von der Futterachse 8 aus gesehen hinter den Spannschneidenkanten 20 verläuft, und durch eine äußere Grenzfläche 27, die vom äußeren Randbereich 28 der Spannfläche 17 mit freiem Abstand über die auf ihrer Seite liegende Spannschneide 14, d. h. Schneidenflanke 16 und Schneidenkante 20 hinweg schräg zur Backenmittelebene 15 verläuft. Die Festlegung des Spannflächenverlaufs mit Hilfe dieser gedachten Grenzflächen 26, 27 erfolgt in der Weise, daß jede Spannfläche mit ihrem an die Schneidenflanke 16 anschliessenden inneren Bereich 29 in der gedachten inneren Grenzfläche 26 und mit ihrem äußeren Bereich 30 in der gedachten äußeren Grenzfläche 27 verläuft oder diese Grenzflächen 26, 27 zumindest, wie in den Ausführungsbeispielen, tangiert. Dabei entspricht die äußere Grenzfläche 27 in ihrem Verlauf etwa dem Profil von Rillen, die längsverlaufend im Werkzeugschaft zum drehschlüssigen Eingriff der Spannbacken 6 vorgesehen sind. Ein solcher Werkzeugschaft ist in Fig. 4 bezüglich seiner zylindrischen Umfangsfläche bei 31 angedeutet. Dabei sind im übrigen für die äußere Grenzfläche 27 zwei Verläufe dargestellt, nämlich ein im wesentlichen dreieckiger, ausgezogen gezeichneter Flächenverlauf 27.1 und ein im wesentlichen konkav gewölbter, strichpunktiert gezeichneter Flächenverlauf 27.2. Wird daher ein Werkzeugschaft mit einem diesen Flächenverläufen entsprechendem Rillenprofil eingespannt, so kommen nur die äußeren Bereiche 30 der seitlichen Spannflächen 17 an den Rillenseitenwänden zum Tragen. Die Spannschneiden 14 einschließlich ihrer Schneidenflanken 16 stehen frei in das Rillenprofil vor. Der zur Backenmittelebene 15 senkrechte Abstand zwischen diesen an der Rillenwand zum Tragen kommenden äußeren Bereichen 30 der Spannflächen 17 einerseits und den Schneidenkanten 20 der Spannschneiden 14 andererseits ist im übrigen so groß, daß bei einer aufgrund üblichen Spiels nicht auszuschließenden seitlichen Spannbackenverlagerung (Doppelpfeil 34) die Schneidenflanken 16 und die Schneidenkanten 20 nicht mit der äußeren Grenzfläche 27, also bei eingespanntem Werkzeug mit der Rillenwand in Berührung kommen können. Wird dagegen ein Werkzeug mit glattem, also ungerilltem Schaft eingespannt, so kommen zunächst nur die Spannschneiden 14 zum Tragen. Im Schlagbohrbetrieb können sich die Spannschneiden 14 zwar schnell in den Werkzeugschaft einarbeiten, jedoch wird ihr Eindringen begrenzt durch die an die äußeren Schneidenflanken 16 anschließenden inneren Bereiche 29 der Spannflächen 17, die bezüglich ihrer Lage und Gestalt durch die innere Grenzfläche 26 bestimmt sind. Diese inneren Flächenbereiche 29 der Spannflächen 17 kommen am Werkzeugschaft zur Anlage, wenn die Spannschneiden 14 bis zur Tiefe der inneren Grenzfläche 26 in den Werkzeugschaft eingedrungen sind. Verläuft zwischen den Spannschneiden 14 eine Nut 35, so kann deren Nutgrund 36 ebenfalls zur Begrenzung der Eindringtiefe der Spannschneiden 14 im Werkzeugschaft beitragen. Zweckmäßig ist dazu der Nutgrund 36 ebenfalls bis mindestens auf die innere Grenzfläche 26 vertieft. Im Ausführungsbeispiel ist die innere Grenzfläche 26 von einer Ebene gebildet, die von den Schneidenkanten 20 einen Abstand von zwei bis drei Zehntel Millimeter aufweist. Dieser Abstand hat sich in der Praxis als optimal dafür erwiesen, daß die Spannschneiden 14 einerseits schnell in den Werkzeugschaft eindringen und sich freiarbeiten können, andererseits die nötige drehschlüssige Verbindung mit dem Werkzeugschaft ergeben. Im Hinblick hierauf empfiehlt es sich auch, den Spitzenwinkel 37 der Spannschneiden 14 zu etwa 90° bis 100° zu wählen.

Die in Fig. 4 ausgezogen dargestellte äußere Grenzfläche 27.1 ist von einer Ebene gebildet, die mit der Backenmittelebene 15 einen Winkel 38 von 60° einschließt. Im strichpunktiert gezeichneten Beispiel 27.2 verläuft dagegen die äußere Grenzfläche 27 gewölbt, wobei die Tangente im in der Backenmittelebene 15 liegenden Flächenscheitel 39 einen Winkel von 90°, im an der Spannfläche 17 liegenden Flächenfuß einen Winkel von wiederum 600 mit der Backenmittelebene 15 einschließt. Aus Fig. 4 ist unmittelbar ersichtlich, daß eine Spannbacke 6, die für ein gewölbtes Rillenprofil (strichpunktierte äußere Grenzfläche 27.2) geeignet ist, dies erst recht für ein im wesentlichen dreieckiges Rillenprofil (ausgezogen gezeichnete äußere Grenzfläche 27.1) ist, da im letzteren Fall der Freiraum innerhalb der Rille zwischen den Spannschneiden 14, d. h. den Schneidenflanken 16 und Schneidenkanten 20 einerseits und der Rillenwand andererseits nur größer ist. Die Spannfläche 17 verläuft an der Schneidenflanke 16 innerhalb der inneren Grenzfläche 26, so daß bei der Begrenzung der Eindringtiefe der Spannschneiden 14 in den Werkzeugschaft eine großflächige Anlage zwischen der Spannfläche 17 und der Wand des Werkzeugschaftes zustande kommt. Verlaufen die Spannflächen 17 überall innerhalb der für sie bestimmenden Grenzflächen 26, 27, wie dies in Fig. 4 am Beispiel der rechten Spannfläche 17 dargestellt ist, so entstehen Kantenbildungen jeweils bei 40. Daher ist es besser, daß die Spannflächen 17 zwischen den Schneidenflanken 16 und den seitlichen Spannbackenrändern 28 überall konvex gewölbt verlaufen, wie dies bei jeweils 41 dargestellt ist.

Die Schneidenflanken 16 sind ebene Flächen. Sie können jedoch auch leicht konkav verlaufen, wenn kleinere Spitzenwinkel 37 der Schneidkanten gewünscht werden sollten.

**Patentansprüche**

1. Backenspannfutter, insbesondere zum schlagenden und/oder drehenden Bohren, dessen zentrisch zur Futterachse (8) verstellbare Spannbacken (6) je zwei zueinander und zur Futterachse (8) parallel verlaufende Spannschneiden (14), die spiegelsymmetrisch zu der durch die Futterachse (8) gehenden Backenmittelebene (15) ausgebildet sind, und auf der außenliegenden Seite jeder Spannschneide (14) in zur Backenmittelebene (15) spiegelsymmetrischer Ausbildung eine zur Futterachse (8) parallele Spannfläche (17) aufweisen, die mit ihrem äußeren Bereich (30) in einer gedachten äußeren Grenzfläche (27) verläuft oder diese Grenzfläche (27) zumindest tangiert, die vom äußeren Rand (28) der Spannfläche (17) mit freiem Abstand über die auf ihrer Seite liegende Spannschneide (14) und äußere Schneidenflanke (16) hinweg schräg zur Backenmittelebene (15) verläuft, dadurch gekennzeichnet, daß die Spannfläche (17) an die äußere Schneidenflanke (16) anschließt und mit ihrem an die äußere Schneidenflanke (16) anschließenden inneren Bereich (29) in einer gedachten inneren Grenzfläche (26) verläuft oder diese Grenzfläche (26) zumindest tangiert, die senkrecht durch die Backenmittelebene (15) und von der Futterachse (8) aus gesehen hinter den Spannschneidenkanten (20) verläuft.

2. Backenspannfutter nach Anspruch 1, dadurch gekennzeichnet, daß zwischen den Spannschneiden (14) eine Nut (35) verläuft, deren Nutgrund (36) mindestens bis auf die innere Grenzfläche (26) vertieft ist.

3. Backenspannfutter nach Anspruch 1 oder 2, dadurch gekennzeichnet, daß die innere Grenzfläche (26) von einer Ebene gebildet ist, die von den Schneidenkanten (20) einen Abstand von einigen Zehntel Millimeter aufweist.

4. Backenspannfutter nach Anspruch 3, dadurch gekennzeichnet, daß der Abstand zwischen den Schneidenkanten (20) und der inneren Grenzfläche (26) zwei bis drei Zehntel Millimeter beträgt.

5. Backenspannfutter nach einem der Ansprüche 1 bis 4, dadurch gekennzeichnet, daß die äußere Grenzfläche (27) von einer Ebene gebildet ist, die mit der Backenmittelebene (15) einen Winkel von 45° bis 65° einschließt.

6. Backenspannfutter nach einem der Ansprüche 1 bis 4, dadurch gekennzeichnet, daß die äußere Grenzfläche (27) zur Spannbacke (6) hin konkav gewölbt ist und ihre Tangente im in der Backenmittelebene (15) liegenden Flächenscheitel (39) einen Winkel von 45° bis 65° mit der Backenmittelebene (15) einschließt.

7. Backenspannfutter nach Anspruch 5 oder 6, dadurch gekennzeichnet, daß der Winkel zwischen der Backenmittelebene (15) und der äußeren Grenzfläche (27) im Bereich der Spannfläche (17) 60° beträgt.

8. Backenspannfutter nach den Ansprüchen 1 bis 7, dadurch gekennzeichnet, daß die Spannfläche (17) an der Schneidenflanke (16) in der inneren Grenzfläche (26) verläuft.

9. Backenspannfutter nach einem der Ansprüche 1 bis 8, dadurch gekennzeichnet, daß die äußeren Schneidenflanken (16) ebene Flächen sind.

10. Backenspannfutter nach einem der Ansprüche 1 bis 9, dadurch gekennzeichnet, daß der Spitzenwinkel (37) der Spannschneiden (14) etwa 90° bis 100° beträgt.

11. Backenspannfutter nach einem der Ansprüche 1 bis 10, dadurch gekennzeichnet, daß die Spannflächen (17) konvex gewölbt sind.


## Claims

1. A jaw clamping chuck, in particular for percussion and/or rotary drilling, whose clamping jaws (6), which are adjustable central to the chuck axis (8), each have two clamping blades (14), which extend parallel to one another and to the chuck axis (8) and are formed symmetrically to the jaw central plane (15) extending through the chuck axis (8), the clamping jaws (6) also having a clamping face (17) on the external side of each clamping blade (14) formed symmetrically to the jaw central plane (15), the outer region (30) of the clamping face (17) extending in a hypothetical outer border face (27) or at least extends tangentially to this border face (27), the border face extending away from the outer edge (28) of the clamping face (17) obliquely to the jaw central plane (15) at a free distance over the clamping blade (14) and outer blade flank (16) lying at its side, characterised in that the clamping face (17) abuts the outer blade flank (16) and the inner region (29) of the clamping face (17) abutting the outer blade flank (16) extends in a hypothetical inner border face (26) or at least extends tangentially to this border face (26), which extends perpendicularly through the jaw central plane (15) and behind the clamping blade edges (20) as seen from the chuck axis (8).

2. A jaw clamping chuck according to Claim 1, characterised in that a groove (35) extends between the clamping blades (14), the bottom (36) of the groove being sunk at least as far as the inner border face (26).

3. A jaw clamping chuck according to Claim 1 or 2, characterised in that the inner border face (26) is formed by a plane which has a distance from the blade edges (20) of a few tenths of a millimetre.

4. A jaw clamping chuck according to Claim 3, characterised in that the distance between the blade edges (20) and the inner border face (26) is two to three millimetres.

5. A jaw clamping chuck according to one of Claims 1 to 4, characterised in that the outer border face (27) is formed by a plane which forms an angle of 45° to 65° with the jaw central plane (15).

6. A jaw clamping chuck according to one of Claims 1 to 4, characterised in that the outer border face (27) is concave with respect to the clamping jaw (6) and its tangent in the surface apex (39) lying in the jaw central plane (15) forms an angle of 45° to 65° with the jaw central plane (15).

7. A jaw clamping chuck according to Claim 5 or 6, characterised in that the angle between the jaw central plane (15) and the outer border face (27) in the region of the clamping face (17) is 60°.

8. A jaw clamping chuck according to Claims 1 to 7, characterised in that the clamping face (17) extends to the blade flank (16) in the inner border face (26).

9. A jaw clamping chuck according to Claims 1 to 8, characterised in that the outer blade edges (16) are plane surfaces.

10. A jaw clamping chuck according to one of Claims 1 to 9, characterised in that the acute angle (37) of the clamping blades (14) is approximately 90° to 100°.

11. A jaw clamping chuck according to one of Claims 1 to 10, characterised in that the clamping faces (17) are convex.


## Revendications

1. Mandrin à mâchoires, en particulier pour le perçage à percussion et/ou à rotation, dont les mâchoires de serrage (6) déplaçables concentriquement par rapport à l'axe du mandrin (8) comportent chacune deux taillants de serrage (14) qui s'étendent parallèlement l'un à l'autre et à l'axe du mandrin (8) et sont conformés en symétrie de miroir par rapport au plan médian des mâchoires (15) passant par l'axe du mandrin (8) et, du côté extérieur de chaque taillant de serrage (14), en symétrie de miroir par rapport au plan médian des mâchoires (15), une surface de serrage (17) parallèle à l'axe du mandrin (8) dont la zone extérieure (30) s'étend dans une surface limite extérieure (27) imaginaire ou tangente à au moins cette surface limite (27) laquelle s'étend en oblique du bord extérieur (28) de la surface de serrage (17), à distance libre et en passant sur le taillant de serrage (14) et le flanc extérieur du taillant (16) situés de son côté, jusqu'au plan médian de la mâchoire (15), caractérisé par le fait que la surface de serrage (17) est rattachée au flanc de taillant extérieur (16) et que sa zone intérieure (29) faisant suite au flanc de taillant extérieur (16) s'étend dans une surface limite intérieure (26) imaginaire ou tangeante à au moins cette surface limite (26) qui passe perpendiculairement par le plan médian des mâchoires (15) et, vu de l'axe du mandrin (8), derrière les arêtes (20) des taillants de serrage.

2. Mandrin à mâchoires selon la revendication 1, caractérisé par le fait que, entre les taillants de serrage (14), est prévue une rainure (35) dont le fond (36) s'étend au moins jusque sur la surface limite intérieure (26).

3. Mandrin à mâchoires selon l'une des revendications 1 ou 2, caractérisé par le fait que la surface limite intérieure (26) est constituée par un plan qui présente, par rapport aux arêtes (20) des taillants une distance de quelques dixièmes de millimètre.

4. Mandrin à mâchoires selon la revendication 3, caractérisé par le fait que la distance entre les arêtes (20) des taillants et la surface limite intérieure (26) est de deux à trois dixièmes de millimètre.

5. Mandrin à mâchoires selon l'une quelconque des revendications 1 à 4, caractérisé par le fait que la surface limite extérieure (27) est constituée par un plan qui renferme avec le plan médian des mâchoires (15) un angle de 45° à 65°.

6. Mandrin à mâchoires selon l'une quelconque des revendications 1 à 4, caractérisé par le fait que la surface limite extérieure (27) présente une courbure concave en direction de la mâchoires de serrage (6) et que sa tangente au sommet des surfaces (39) situé dans le plan médian des mâchoires (15) forme avec le plan médian des mâchoires (15) un angle de 45° à 65°.

7. Mandrin à mâchoires selon l'une des revendications 5 ou 6, caractérisé par le fait que l'angle entre le plan médian des mâchoires (15) et la surface limite extérieure (27), dans la zone de la surface de serrage (17), est de 60°.

8. Mandrin à mâchoires selon l'une quelconque des revendications 1 à 7, caractérisé par le fait que la surface de serrage (17) sur le flanc de taillant (16) s'étend à l'intérieur de la surface limite intérieure (26).

9. Mandrin à mâchoires selon l'une quelconque des revendications 1 à 8, caractérisé par le fait que les flancs de taillants extérieurs (16) sont des surfaces planes.

10. Mandrin à mâchoires selon l'une quelconque des revendications 1 à 9, caractérisé par le fait que l'angle au sommet (37) des taillants de serrage (14) est d'environ 90° à 100°.

11. Mandrin à mâchoires selon l'une quelconque des revendications 1 à 10, caractérisé par le fait que les surfaces de serrage (17) présentent une courbure convexe.

0 179 232

Fig. 2

Fig. 3

Fig. 1

1

Fig. 4